# EUROPEAN PATENT SPECIFICATION

(11) **EP 3 730 965 B1**
(45) Date of publication and mention of the grant of the patent: **06.08.2025**
(21) Application number: 20171296.5
(22) Date of filing: 24.04.2020
(51) Int. Cl.: G06T 7/11, G01S 1/70, G06T 7/136, G06T 7/194, H04B 10/116, G01S 5/16, G06T 7/73

(54) **LOCALISATION METHOD AND SYSTEM USING CODED LIGHT**
LOKALISIERUNGSVERFAHREN UND -SYSTEM MIT KODIERTEM LICHT
MÉTHODE ET SYSTÈME DE LOCALISATION UTILISANT LUMIÈRE CODÉE

(30) Priority: 26.04.2019 IT 201900006400
(43) Date of publication of application: 28.10.2020
(73) Proprietor: TCI Telecomunicazioni Italia S.r.l., 21047 Saronno (VA) (IT)
(72) Inventor: CIARAMELLA, Ernesto, 21047 SARONNO (VA) (IT); COSSU, Giulio, 21047 SARONNO (VA) (IT); MESSA, Alessandro, 21047 SARONNO (VA) (IT); STURNIOLO, Alessandro, 21047 SARONNO (VA) (IT)
(74) Representative: Robba, Pierpaolo

(56) References cited:
- US-A1- 2012 038 789
- US-A1- 2014 086 590
- US-A1- 2018 006 724

## Description

### Technical Field

This invention relates to a localisation method and system using coded light.

Preferably, but not exclusively, the invention is intended to localise mobile communication terminals, such as cellular phones, in particular smartphones, tablets, notebooks and so on, moving inside a space where a plurality of light sources are present, typically LEDs or lasers, operating in the visible spectrum and emitting coded light.

### Background of the Invention

In localisation systems based on the use of coded light, the light sources are typically modulated by signals representative of the identity of each source (identification code), more particularly signals having undergone a modulation that cannot be perceived by the human eye. A camera, e.g. the camera of a mobile terminal, acquires several images of a source and processes them in order to recognise the identification code. By accessing information associating the identification codes of the individual sources with the positions thereof inside the space, the terminal can retrieve the source position from the identification code and hence recognise its own position with high precision.

The possibility of using coded light communication systems for localisation purposes is mentioned for instance in US 2014/0086590, US 2016/359650 A1, EP 2 503 852 A1, EP 3 025 442 B1, EP 3 219 172.

A common technique for the acquisition of images of coded light sources by the cameras of mobile terminals is the so called "rolling shutter" technique, according to which the different lines of the matrix of pixels of the camera are read and converted into images at different times, so that the temporal modulation of the source is converted into a spatial modulation in the image acquired. Examples of systems using such a technique are described in documents US 2014/0086590, US 2016/359650 A1, EP 2 503 852 A1, EP 3 025 442 B1 mentioned above.

More particularly, EP 2 503 852 A1 discloses a detection system intended to recognise identification codes embedded in the light emitted by the sources and consisting each of a temporal sequence of modulations of a characteristic of the light emitted. The system acquires images of a scene illuminated by the sources as a plurality of temporally shifted line instances. Each line includes an instance of the temporal sequence of modulations forming a code. The system detects the codes form the spatial pattern of modulations (i.e. from the light distribution in the different lines) by using a filter, more particularly a Gabor filter.

Use of such a known technique makes recognition of the identification codes complex from the processing standpoint, with a consequent increase in energy consumption. This is a problem especially in case of mobile terminals. Moreover, such a technique can render the system prone to errors induced by the supply electronics of the light sources, which errors may lead to a failed recognition or a wrong recognition of the identification code transmitted. Also, in order to correctly distinguish the individual contributions of a plurality of light sources to each image acquired, EP 2 503 852 A1 subdivides the image into predetermined blocks of pixels, which negatively affects the correct source identification and, moreover, is particularly prone to errors when some sources are close to one another. Another drawback is that no means for excluding false recognitions are provided.

US 2014/0086590 discloses a localisation method and system in which the sources are modulated by one or more digital signals forming the identification code of each source. At the mobile terminal of a user, the images acquired by the camera are processed to recognise the identification code of a source present in the images. The processing includes an M-fold application (M = number of columns) of a one-dimensional discrete Fourier transform and of a two-dimensional Fourier transform to each of the regions into which each image is divided. By means of the identification code, the terminal accesses information associating the codes with the individual sources and the positions thereof inside the space. The processing is performed on a plurality of images.

Also the technique disclosed in this document entails a very complex processing, with high energy consumption, in order to recognise the identification code of a source. Also the technique adopted to correctly distinguish the contributions of a plurality of sources to each image, requiring the analysis of all pixels in the image, contributes to such a complexity. Moreover, like the technique disclosed in EP 2 503 852 A1, also this one is prone to errors induced by the supply electronics of the light sources and does not provide for means for excluding false recognitions.

US 2018/0006724 discloses another localisation system of the above kind, in which the identification codes of the sources are digitally encoded in base 3. Recognition of an identification code in a signal received entails the analysis of a plurality of consecutive images and hence also in this case processing is complex and energy consuming.

US 2012/038789 discloses a method for determining the variation of background light level during the capture of image/video information using compressive sensing hardware. No application to localisation is disclosed.

### Description of the Invention

It is an object of the present invention to provide a localisation method and system using coded light, which overcome the drawbacks of the prior art.

According to the invention, this is obtained by a method as defined in claim 1. Preferred embodiments are defined in the appended dependent claims.

Advantageously, the periodic signal or the combination of periodic signals forming the modulating signal is an analogue periodic signal or a combination of analogue periodic signals. Such an analogue signal or such a combination of analogue signals is generated so that the Fourier transform, expressed in the wave number domain, of the brightness profile of the image has few non-zero coefficients: the indices of said coefficients may represent the identification code of the source. For instance, the identification code for a source is then the index of the non-zero coefficient or the set of the indices of the non-zero coefficients.

Advantageously, before the step of determining the indices of the coefficients in the wave number domain, the method includes the step of bringing the brightness profile to a pre-set and constant length by adding predetermined leading and trailing values, the length being such as to determine, in the signal resulting from the transform, a position that is fixed and independent of the image size for a peak that is in one-to-one correspondence with the index of a coefficient, in the wave number domain, of the modulating signal.

Advantageously, each source can be modulated:
- with at least one periodic analogue signal having such a frequency that its period is a submultiple of the time of acquisition of the region of interest; or, in the alternative,
- with at least one periodic analogue signal in which the coefficients of the frequency components are selected from a set of values increasing or decreasing in non-linear manner; in case of modulation with a signal of this kind, the ratio between the coefficients of the modulation components of each combination can be used as a part of the identification code of the source.

Advantageously, the compatibility checks on a region of interest include a check on the size and a check on the presence of modulation along two orthogonal axes of said region, and regions of interest the sizes of which do not fall within a pre-set range and regions of interest which do not exhibit modulation in the reading direction of the matrix of pixels or which exhibit modulation in a direction perpendicular to said reading direction are discarded.

According to the present invention, a system arranged to implement the method is as defined in claim 8. Preferred embodiments are defined in the appended dependent claims.

The invention also relates to a computer program product as defined in claim 15.

### Brief Description of the Figures

The above and other features and advantages of the invention will become more apparent from the following description of preferred embodiments made by way of nonlimiting example with reference to the accompanying drawings, in which elements denoted by a same or similar numerical reference correspond to components having the same or similar function and construction, and in which:
- Fig. 1 shows a scenario of application of the invention;
- Fig. 2 is a principle diagram of a localisation system according to the invention;
- Figs. 3(a) and 3(b) show an exemplary modulating signal, in the time domain and the wave number domain, respectively;
- Fig. 4 is a flow chart of an exemplary method, not forming part of the claimed invention;
- Fig. 5 shows the image of a scene, including a source and the surrounding background, taken by the camera of a cellular phone;
- Fig. 6 shows the region of interest in the image of Fig. 5 in enlarged scale, jointly with the brightness profiles along both axes of the image;
- Figs. 7 and 8 are detailed flow charts of the steps of determining the region of interest and identifying the modulation frequencies according to the invention;
- Fig, 9 shows the Fourier transform of the brightness profile of the region of interest in the wave number domain; and
- Fig. 10 shows the achievement of the independence of the wave vector coefficients from the image size.

### Description of Preferred Embodiments

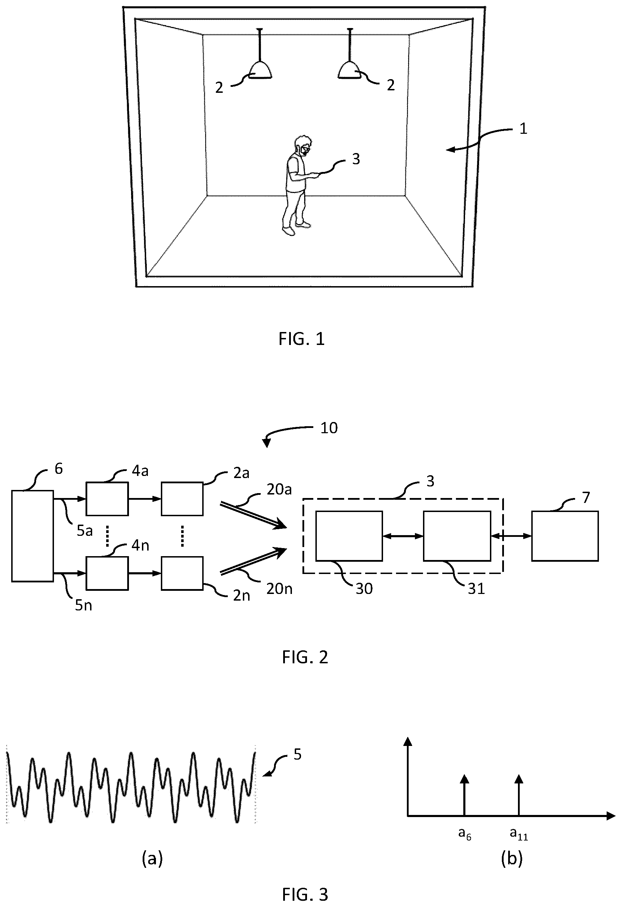

Referring to Fig. 1, there is schematically shown part of a space 1 (e. g. a museum, a store, a large exhibition building, etc.), inside which use of a localisation system exploiting coded light is desired. Even if for the sake of simplicity space 1 is shown in the drawing as a single room, it will comprise a plurality of subspaces or sectors inside which a user of the localisation system will move. A number of sources 2 of visible light, more particularly LEDs or lasers, are located in space 1. A characteristic of the emitted light (e.g. the intensity) is modulated by one or more periodic analogue signals having a frequency or frequencies exceeding the maximum frequency perceivable by the human eye (about 100 Hz), so that people present in space 1 do not perceive such a modulation and are not annoyed by it. Generally, the modulation index is not 100% and it can even be much lower than 100%. The frequency of the modulating signal of each source 2, or the set of the frequencies of the modulating signals in case of a plurality of signals, forms an identification code of source 2. The code, instead of consisting of the actual frequency, could however also consist of other information related to the frequency, in particular the indices of the coefficients of a wave vector, as it will be explained later on. For the moment, reference will be made to codes consisting of a frequency or a frequency set. Hereinafter, for the sake of simplicity and without loss of generality, reference will be made to the modulation with a pair of periodic signals.

A mobile communication terminal 3 equipped with a camera (cellular phone, as shown in the Figure, tablet, notebook or the like), carried by the user, is arranged to acquire an image of a portion of space 1 (scene) including at least one source 2 and to process it to recognise the identification code (and hence the source) and to consequently detect the position of the user inside space 1. Sources 2 must have a light emission covering the area inside which it is desired to localise the user. Clearly, the modulation frequencies must fall within the range detectable by the aforementioned mobile terminals. For the purposes of the localisation, it is not necessary that the camera is directed towards source 2: yet, this can increase the localisation accuracy.

It is also to be appreciated that sources 2 must have such sizes that the camera in terminal 3 can form an image with a size suitable for the processing. If the sources have too small sizes, the sources or the camera must be associated with means for producing a larger image, consisting e.g. of a light scattering device located between source 2 and the camera.

Fig. 2 shows the principle diagram of a localisation system 10 according to the invention. Reference numerals 2a...2n denote the light sources, emitting respective modulated light beams 20a...20n. Each light source is driven by a respective driver 4a...4n, of known type, receiving modulating signals 5a...5n (a pair of periodic analogue signals with different frequencies, in the example described) from means generating same, schematised by block 6. An exemplary modulating signal, denoted by reference numeral 5, is shown in Fig. 3(a). In an embodiment of the invention, to which particular reference will be made hereinafter, the period of each modulating signal is an integer submultiple of a predetermined time T of acquisition, by the camera in terminal 3, of the image portion exploited for recognising the identification codes. Such a time T is preferably set to dt·L, where dt is the reading time of a row of the matrix of pixels of the camera (sampling time) and L is the length of the transform through which the source modulation frequencies are obtained. In an exemplary embodiment, pairs of frequencies mutually spaced by 200 Hz and lying in the range 1 to 4 kHz have been used.

Mobile terminal 3 is schematised by camera 30 (more particularly the front camera, if the terminal is equipped with front and rear cameras) and a processing unit 31. As said before, it is assumed that sources 2a...2n emit light beams the cross sectional sizes of which are not point-like and which are e.g. arranged to illuminate the whole matrix of pixels (detectors) of camera 30. The camera is arranged to generate the images of the sources by the rolling shutter technique, known per se, according to which the lines (usually the rows) of the matrix are sequentially read and transferred into the image. In this manner, the image generated by camera 3 is a file in which the temporal modulation of the intensity of source 2a...2n becomes a spatial modulation. Image acquisition can be controlled by the software of unit 31 or by the user. Owing to the periodicity of the modulating signal, communication between sources 2a...2n and receiver 3 is asynchronous, that is, the software of unit 31 has no need to know the beginning of the modulating signal.

Processing unit 31 is arranged to perform a transformation from the space domain to the frequency domain (e.g. by applying the Fourier transform) of the image acquired by camera 30, in order to directly detect the modulation frequencies of the different sources 2, i.e. the identification codes. Each frequency or frequency combination can be used as reading address for accessing a memory 7 storing e.g. a table associating identification codes, sources and positions thereof. As a result of the reading, terminal 3 may provide the user with the localisation information, e.g. by showing such information on the display or the screen. The information can include the identity of source 2a...2n, the sector of space 1 where the source is located, the source identity and the space sector, or other information items.

Turning back to the modulation of sources 2a...2n, generator 6 can be any generator of analogue periodic signals having characteristics compatible with the modulation band of the light source. Yet, in a preferred embodiment, generator 6 generates signals 5a...5n from one or more non-zero coefficients aᵢ of a vector of coefficients in the wave number domain. After application of the transform to the brightness profile of an image of a source 2a...2n acquired by camera 30, coefficients bⱼ ≠ 0 will be obtained, always in the wave number domain, corresponding to coefficients aᵢ. Indices i of coefficients aᵢ ≠ 0 represent the source identification code. Such indices are determined from the characteristics of camera 30 and length L of the transform applied to the image brightness profile during processing. The coefficients hence are in practice the coefficients of the transform. The vector of coefficients will have length N, where N is the number of frequencies from which the modulation frequencies can be selected. A vector with sixteen coefficients has been shown in the following Example I, where two coefficients, e.g. the ones with indices 6 and 11, are different from zero: this corresponds to modulating the source with a pair of periodic signals. Index pair 6, 11 is the identification code of a source.

### Example I

| Indices (i) | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| Coefficients (aᵢ) | 0 | 0 | 0 | 0 | 0 | 0 | 1 | 0 | 0 | 0 | 0 | 1 | 0 | 0 | 0 | 0 |

The vector of Example I is shown in Fig. 3(b).

Through a suitable mathematical manipulation, more particularly through a transformation from the wave number domain to the time domain (e.g., by applying an inverse fast Fourier transform), periodic signal 5 (5a...5n) is obtained. At the receiver, the transformation from the space domain to the wave number domain will provide an index j or a set of indices j forming the reading address for memory 7.

Preferably, indices i to be used in the code will be chosen so as to optimally exploit the features of camera 30, that is, so that, once the Fourier transform has been computed, the frequencies exactly fall at the centre of the integration bin or, in other words, so that the frequencies chosen are integer multiples of the frequency spacing between two consecutive indices after transformation.

The image analysis results in identifying, in the wave number domain, non-zero coefficients bⱼ that, in case of perfect reception, are identical to coefficients aᵢ. It is to be appreciated that, if non-linear distortions are present (for instance, but not only, in the detection apparatus), the image analysis can result in obtaining, as coefficients bⱼ different from 0, not only the starting coefficients aᵢ (main coefficients), but also other coefficients corresponding to harmonics of the starting modulation frequencies, i.e. coefficients the respective index j of which is an integer multiple of index i of one of the main coefficients (spurious coefficients). A spurious coefficient will have a lower value than the respective main coefficient. This case is shown in Example II. As shown, also the spurious coefficient with index 12, which is a harmonic of index 6 (for which a₆ = 1) is different from 0 and has value 0.2. Elimination of the spurious coefficients can be performed by a simple algorithm, for instance, but not only, by using a threshold for the values .of coefficients bⱼ. The presence of a spurious harmonic therefore does not change the source identification code that still consists of index pair 6, 11.

### Example II

| Indices (j) | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| Coefficients (bj) | 0 | 0 | 0 | 0 | 0 | 0 | 1 | 0 | 0 | 0 | 0 | 1 | 0,2 | 0 | 0 | 0 |

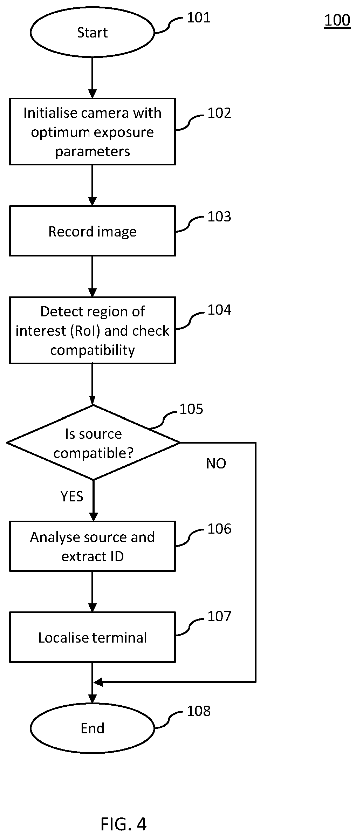

Fig. 4 shows flow chart 100 of the localisation method according to an example, not forming part of the invention.

Once the system has started (step 101), the first operation (step 102) is initialising camera 30. By such an operation, the exposure parameters for the specific camera better suited to detect brightness variations between adjacent matrix rows are set. Exposure parameters could even be made adaptive to strong light variations. If the camera is directly pointed towards the source, possible saturation problems will have to be taken into account.

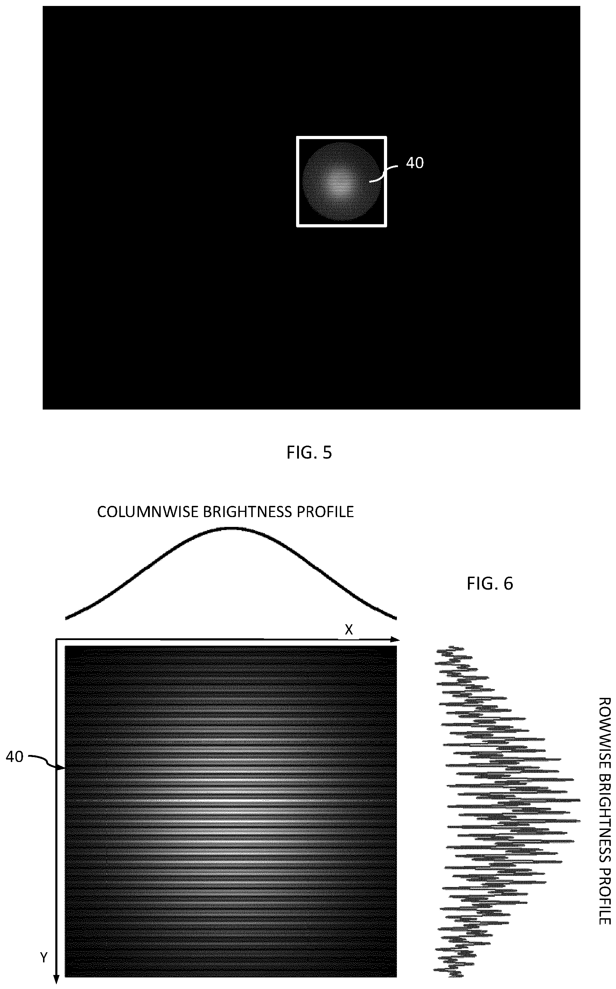

At subsequent step 103, camera 30 takes, with the parameters set during the previous step, a picture (shown in Fig. 5) of a scene including one or more sources 2 and the surrounding area, and hence records a modulation on a spatially distributed projection of the scene photographed. The image acquired by the detectors of camera 30 is possibly submitted to compression in unit 31. Generally, but not necessarily, it is advantageous to pass from a colour image (corresponding to three matrices of pixels) to an image reporting only the brightness (attainable as a weighted average of the three matrices, with suitable weights).

The image obtained at step 103 is processed to determine one or more areas (hereinafter referred to as RoIs, Regions of Interest), corresponding to the illuminating sources. Such RoIs correspond to all possible light sources, including also the sources that are not needed for the present invention and that could on the contrary be a cause of disturbance. The subsequent steps of the algorithm are performed only on such image areas, so as to reduce the computational load (step 104). A RoI substantially corresponds to a block of pixels where a source is present.

Fig. 5 shows an image containing a single source, and the corresponding RoI is area 40 enclosed within a square. The RoI of Fig. 5 is depicted in enlarged scale in Fig. 6, together with the row-wise (along Y axis) and column-wise (along X axis) brightness profiles.

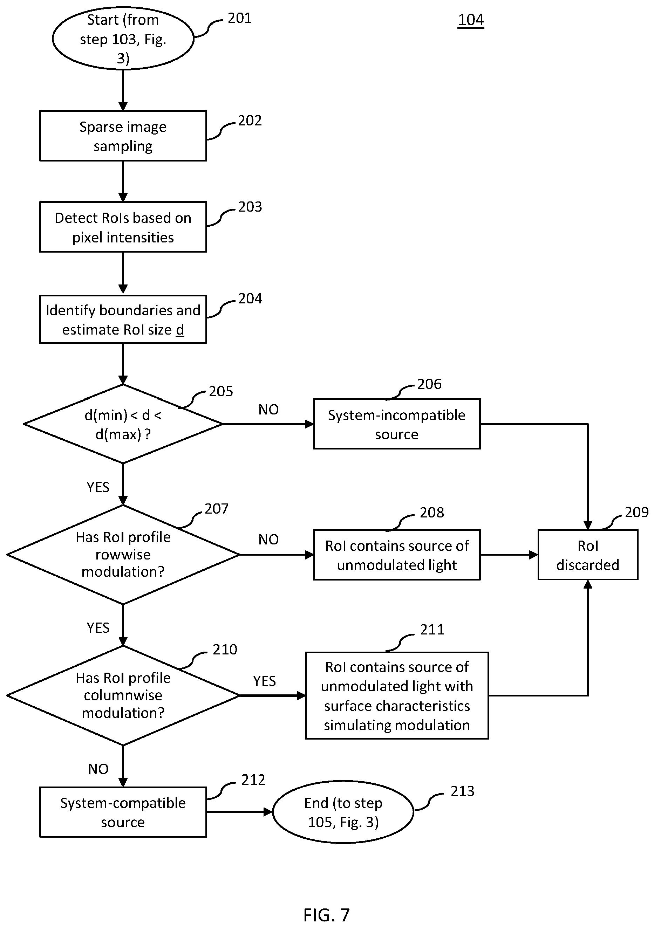

At step 104, besides the RoI determination, also a check on the compliance of the corresponding source with the system specifications is made, so as to eliminate false recognitions. Advantageously, sources that do not pass the compliance check are excluded from the subsequent analysis (output NO of step 105, directly leading to step 108 of end of the operations). The operations performed for the RoI determination and the compliance check will be disclosed in more detail with reference to Fig. 7.

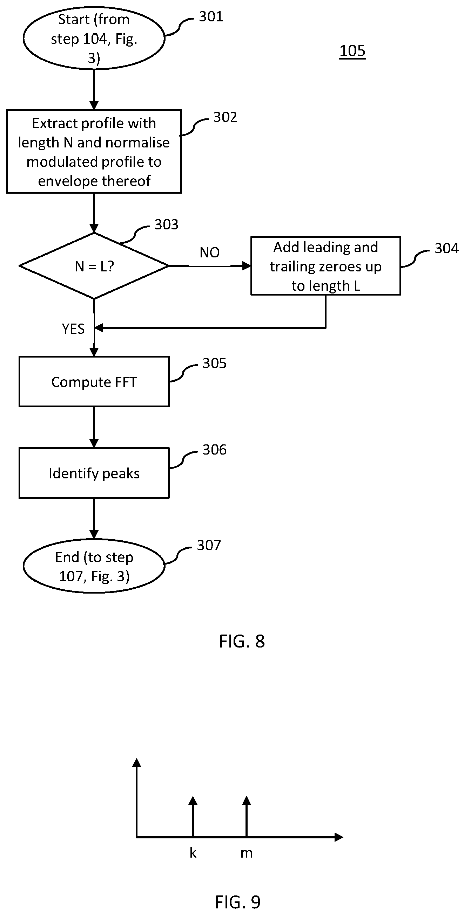

For the RoIs corresponding to system-compatible sources, an analysis of the corresponding source is performed at subsequent step 106, and recognition first of coefficients bⱼ and then of the identification code is performed. The operations of step 106 will be disclosed in more detail with reference to Fig. 8.

At subsequent step 107, the code identified at step 106 is used to retrieve the information about the source position from memory 7 (Fig. 2). Localisation is thus complete.

If the user is moving, his/her position changes in time and the method must provide for processing unit 31 commanding taking a picture and analysing it with a certain periodicity (e.g. every second).

It is to be appreciated that the method demands processing of a single image, contrary to the prior art, and hence limits the processing load and consequently the energy consumption, which is important for use in mobile terminals.

Referring to Fig. 6, in order to determine RoI 40, the first step after start 201 is a sparse sampling of the rows and columns of the image (step 202). Through that sampling one pixel, regularly distributed over the image, is taken every K pixels and a new matrix is created. By such an operation, the amount of data is reduced by a factor K, so that the computational complexity and the energy consumption by the terminal are reduced, since the number of necessary operations is reduced by about K². In experimental tests, values of K of the order of hundreds have been used, with a computational reduction of at least four orders of magnitude. At subsequent step 203, the pixels of such a new matrix are used to estimate the average intensity of the background, based on which a brightness threshold is computed that allows identifying the boundaries of RoI 40 and estimating the size d thereof (step 204).

Subsequently, each RoI is checked in order to verify its compatibility with the system characteristics and to eliminate as far as possible false recognitions. In an exemplary embodiment of the invention, the checks are performed at three levels.

A first check is a size check (step 205). RoI sizes d must range from a minimum dₘᵢₙ to a maximum dₘₐₓ, and RoIs that do not meet that criterion (output NO of step 205) are considered as coming from system-incompatible sources (step 206) and discarded (step 209).

RoIs passing the size check (output YES of step 205) are submitted to checks on the presence of row-wise modulation, i.e. along Y axis (step 207), and column-wise modulation, i.e. along X axis (step 208). A RoI corresponding to a system-compatible source must exhibit modulation along Y axis (output YES of step 207) and must not exhibit modulation along X axis (output NO of step 210). If no modulation along Y axis exists (output NO of step 207), the RoI corresponds to an unmodulated light source (step 208), whereas, if modulation along X axis exists (output YES of step 210), the RoI corresponds to an unmodulated light source, the surface of which has however characteristics simulating modulation (step 211). In both cases the RoI is discarded (step 209), like RoIs that do not meet the size requirements.

Of course, also further or different checks will be possible.

If the RoI passes the checks, and hence the source is compatible with the system (step 212), the operations of step 104 have ended. Processing goes on with step 106 in Fig. 4.

Referring to Fig. 8, in order to recognise the modulation frequency or frequencies of a source 2a...2n (Fig. 2), the first step after start 301 is the extraction of the brightness profile of RoI 40 (step 302) in the reading direction of the same RoI. Profile extraction substantially corresponds to creating a black-and-white image, this resulting in an increase in signal-to-noise ratio. Such a profile has a length N, where N is the number of rows in the RoI, and the brightness value for each row is the sum or the average (even partial) of the brightness values of all pixels in the row, or even the brightness value of a single column, in the middle of the image of the source. This step contributes to increasing signal-to-noise ratio. Of course, since the whole background has been eliminated by extracting the RoI, N is smaller than number Nr of rows in the whole picture.

A further enhancement in the profile along Y axis can be obtained by normalising the modulated profile to its slowly variable envelope. This allows reducing distortion effects in the brightness profile and to eliminate RoIs corresponding to spurious images, such as reflections and so on.

In order to avoid the effects of the image size, which depends on the distance and can affect the correct detection of the modulation frequencies, a check on profile length N is made (step 303) in order to verify that it is equal to L. In case of negative outcome of the check, zeroes are added (step 304) at the beginning and the end of the profile to bring it to length L. In case of positive outcome of the check of step 303, or after having added the zeroes at step 304, each signal having length L is submitted to a fast Fourier transform (step 305), by extrapolating only the absolute value of the transform, and the highest peaks in the spectrum are identified (step 306). The result of the application of the Fourier transform to the RoI having the Y-axis profile shown in Fig. 6 is depicted in Fig. 9 in the wave number domain. Reference symbols k and m denote the indices of the coefficients of the wave vector resulting from the transformation, which indices, in the absence of distortions, will correspond (apart from a multiplicative factor) to the indices of coefficients a₆ and a₁₁ shown in Fig. 3(b). Moreover, in order to eliminate false positives, a check on the signal-to-noise ratio of the peaks detected to all other values of the transform can also be made. In other words, the ratios of the amplitudes of the signal peaks to all other peaks (noise) are evaluated, the latter peaks being generated e.g. by the camera noise. The peaks detected will be considered as actually due to a modulation of the source if such a ratio exceeds a predetermined threshold.

Once indices k, m have been identified, the identification code of the source being considered is determined, and possibly the values of the actual frequencies are retrieved, if the frequencies have been used as the identification code. Since in the example described the frequencies (and hence the indices) are equally spaced and have a constant position, a calibration operation in which the algorithm is executed by using a known frequency will be sufficient to this end. The identification step has thus ended and processing goes on with step 107 in Fig. 4.

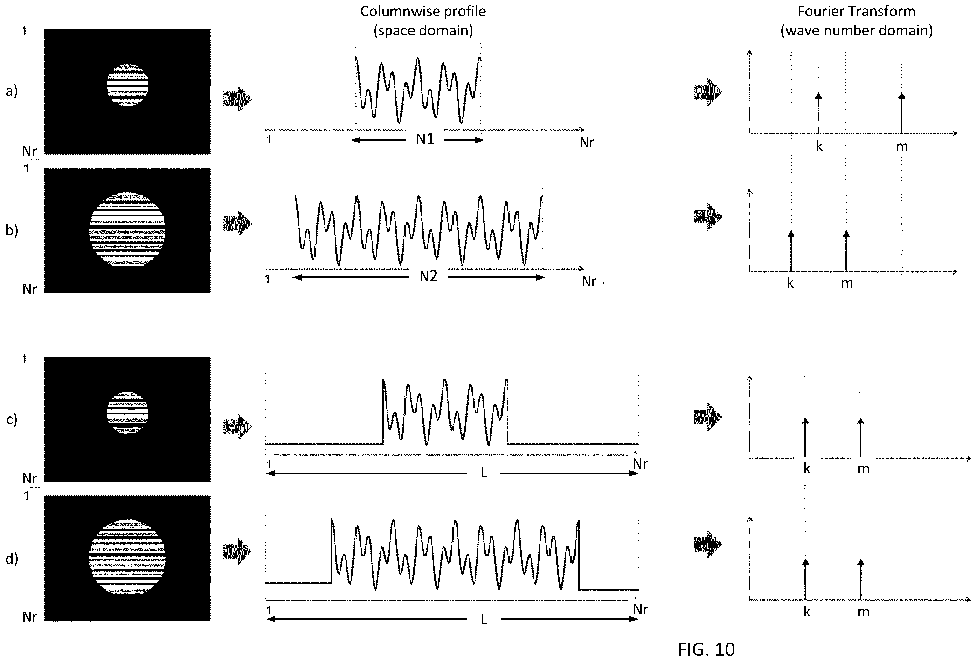

In order to illustrate the effect of the addition of zeroes, reference is made to Fig. 10, where lines a) and b) depict a pair of images taken at different distances, to which the Fourier transform is applied without adding zeroes, and lines c) d) depict the application of the Fourier transform to the same pair of images yet with the addition of zeroes at the beginning and the end of the profile. The RoI profiles of the two pairs of images have a length N1 in case of lines a) and c), and a length N2 in case of lines b) and d). For the sake of simplicity, lengths N1, N2 have been indicated only for lines a) and b). If zeroes are not added to attain length L, the positions of indices k, m vary as Ni (i = 1, 2), and hence the distance from the source, varies, as it can clearly be seen in the right portion of lines a), b). Consequently, also the index of the corresponding coefficient varies and, to avoid identification errors, the calibration mentioned above is necessary. This makes processing heavier and more easily prone to errors. If on the contrary zeroes are added, Ni is constant and equal to L, whatever the image size, as it can be seen in lines c) and d), and hence indices k, m are always in the same positions. The index-frequency association is therefore predetermined. It is to be appreciated that L could even exceed Nr or, as shown in Fig. 10, be equal to Nr, and advantageously it is a power of 2, in order to limit complexity in computing the transform itself.

The invention actually attains the desired aims. Processing a single image in order to localise terminal 3, attaining the identification codes directly by means of a transform (such as the Fourier transform) and analysing only the RoI(s) in an image make processing much simpler, thereby reducing energy consumption. Also the technique employed to detect the RoIs, based on the sparse sampling of the matrix of pixels forming the image, which reduces the matrix size even of a few orders of magnitude, provides a significant contribution to simplifying processing. Use of fixed length profiles eliminates the possibility of errors in frequency identification. Lastly, the compatibility check performed on the RoIs strongly reduces the risk of false recognitions and contributes to reducing the processing load, since processing of system-incompatible RoIs is avoided. The risk of false recognition is further reduced by the check on the signal-to-noise ratio performed on the result of the Fourier transform.

It is still to be appreciated that, thanks to the maximisation of the signal-to-noise ratio allowed by the invention, it is possible to operate with low modulation indices, which reduces the blinking effects perceivable by the human eye especially at low frequencies.

More particularly, hereinbefore it has been assumed that the period of the signals employed for modulating the sources is a submultiple of T. This allows maximising the signal-to-noise ratio. Yet, it is to be taken into account that, when using different cameras, the transform may provide different frequency indices for the same frequencies. This implies therefore the need of a calibration step in order to evaluate sampling time dt of the camera detectors and to properly relate the frequency indices obtained by means of the transform to the actual frequencies. In order to reduce the processing load, it is possible to use one or more signals having frequencies the spacing of which changes in non-linear manner, e.g. according to a logarithmic law. If the sources are modulated by a combination of such signals, this ensures that the value of the ratio between two frequencies is different for each combination and hence that it can be used in alternative or in addition to the frequency values in the identification code, thereby improving the security in source identification. If the identification code of a source consists of a set of indices of wave vector coefficients, this corresponds to saying that the indices in each set are chosen so that their ratio is different from one set to another, and that the identification code includes also or consists of the ratio between the indices. The ratio between the frequencies (and between the indices) is independent from the characteristics of the camera and hence the calibration procedure is not required, unlike the case in which frequencies with constant spacing (or also with linearly varying spacing, where two pairs of different frequencies or different indices could have the same ratio) are used. The effects shown in Fig. 10 are achieved also with such a choice of the modulation frequencies.

Moreover, even if the addition of zeroes has been mentioned, the predetermined length of the profile could be obtained also by adding values different from zero.

Lastly, even if the above description refers to the use of the Fourier transform for the determination of the indices of the wave numbers, clearly a different transform, such as the Laplace transform, the cosine transform and so on could be used.

## Claims

1. Method of localising a device (3), carried by a user, inside a space (1) in which a plurality of sources (2a...2n) of coded visible light are located, the method including the steps of:
- modulating each source (2a...2n) with a different periodic signal (5a...5n) or a different combination of periodic signals (5a...5n) and assigning an identification code related to the frequency of each periodic signal (5a...5n) or to the frequencies of each combination of periodic signals (5a...5n) to said source (2a...2n);
- acquiring (103) images of a scene in which one or more sources (2a...2n) of said plurality of sources (2a...2n) of coded visible light are present by means of a camera (30) of the device (3), the camera including a matrix of pixels sequentially read according to the rolling shutter technique;
- processing (104, 105) an image in order to recognise the identification code of the or each source (2a...2n) present in the image through the steps of:
- identifying (104, 202 - 204) in the image one or more regions of interest (40), each substantially comprising the only block of pixels containing a source (2a...2n);
- checking (104, 205 - 211) the compatibility of the source or sources present in the or each region of interest (40) with the characteristics of a system (10) implementing the method; and, for each system-compatible region of interest (40),
- extracting (302) a brightness profile of the region of interest (40) in the reading direction of the matrix of pixels; and
- determining (305, 306) the indices of the non-zero coefficients, in the wave number domain, characterising the brightness profile, and obtaining therefrom the identification code of the source (2a...2n) corresponding to the region being processed;
- and accessing (107), by using the identification code recognised, information associating the codes with the sources (2a...2n) and their positions in the space (1);
**characterised in that** the processing step (104, 105) is performed on a single image and performs the extraction of the brightness profile along a single line, in the reading direction, of the matrix of pixels, such that the brightness value for each row of the matrix of pixels is the sum or average of the brightness values of all pixels in the row, or alternatively the sum or average of the brightness values of part of the pixels in the row, or yet the brightness value of a single column, in the middle of the matrix, and **in that** the identification (202 - 204) of a region of interest includes the steps of:
- performing (202) a sparse sampling of the image by taking only one every K pixels;
- building a reduced matrix including the pixels resulting from the sampling;
- analysing (203) the brightness of the pixels in the reduced matrix in order to determine an average brightness of the image background; and
- calculating a brightness threshold exceeding of which identifies the boundaries of the region of interest (40).

2. Method according to claim 1, wherein:
- the identification code of a source (2a...2n) consists of the frequency of said periodic signal (5a...5n) or of the set of the frequencies of said combination of periodic signals (5a...5n); or
- said periodic signal (5a...5n) or said combination of periodic signals (5a...5n) is generated so as to produce an image the brightness profile of which is **characterised by** one or a plurality of non-zero coefficients in the wave number domain, and the identification code of a source (2a...2n) consists of either the index of the non-zero coefficient, in case of modulation with a single periodic signal (5a...5n), or the set of the indices of the non-zero coefficients, in case of modulation with a combination of periodic signals (5a...5n).

3. Method according to claim 1 or 2, including, prior to the step of determining the indices of the coefficients in the wave number domain, the step of bringing (303, 304) said brightness profile to a pre-set and constant length (L), preferably a power of 2, by adding predetermined leading and trailing values, the length being such as to determine, in the signal in the wave number domain, a position that is fixed and independent of the image size for a peak that is in one-to-one correspondence with said index or one of said indices.

4. Method according to any preceding claim, wherein the compatibility checks on a region of interest include a check (205) on the size and a check (207, 210) on the presence of modulation along two orthogonal axes of said region, and wherein regions of interest the size of which does not fall within a pre-set range and regions of interest which do not exhibit modulation in the reading direction of the matrix of pixels or which exhibit modulation in a direction perpendicular to said reading direction are discarded.

5. Method according to any preceding claim, wherein each source (2a...2n) is modulated:
- with at least one analogue periodic signal (5a...5n) having such a frequency that its period is a submultiple of the time of acquisition of the region of interest (40) by the camera (30); or, in the alternative,
- with at least one analogue periodic signal (5a...5n) the frequency of which is selected from a set of frequencies that are mutually spaced by values increasing or decreasing in non-linear manner, or in which the or each index is selected from a set of indices that are mutually spaced by values increasing or decreasing in non-linear manner.

6. Method according to claim 5, wherein, in case of modulation with a combination of periodic signals (5a...5n) in which the frequencies or the indices of the coefficients are selected from a set of frequencies or indices, respectively, which are mutually spaced by values increasing or decreasing in non-linear manner, the ratio between the frequencies or the indices of the coefficients of the signals in each combination is used as part of the identification code of the source (2a...2n).

7. Method according to any preceding claim, wherein, for recognising the identification code, the absolute value of the signal obtained by the transform is extrapolated and the positions and the values of the peaks of such signal are determined.

8. Localisation system using coded light, for localising a device (3) carried by a user inside a space (1), the system including:
- a plurality of sources (2a...2n) of coded visible light located in the space (1);
- means (4a...4n) for driving the sources (2a...2n) of said plurality of sources (2a...2n) of coded visible light, the means being arranged to modulate the light emitted by each source (2a...2n) with a different periodic signal (5a...5n) or a different combination of periodic signals (5a...5n), the frequency of each periodic signal (5a...5n) or the frequencies of each combination of periodic signals (5a...5n) being related to an identification code for the respective source (2a...2n);
- a camera (30) belonging to the device (3) and arranged to take images of a scene in which one or more sources (2a...2n) are present, the camera (30) having a matrix of pixels sequentially read according to the rolling shutter technique;
- a processing unit (31), also belonging to the device (3) and programmed for:
- identifying in an image of the scene one or more regions of interest (40) each substantially comprising the only block of pixels containing a source (2a...2n);
- checking the compatibility of the source (2a...2n) present in the or each region of interest (40) with the characteristics of the system (10); and, for each system-compatible region of interest (40),
- extracting a brightness profile of the region of interest (40) in the reading direction of the matrix of pixels; and
- determining the indices of the non-zero coefficients, in the wave number domain, characterising the brightness profile, and obtaining therefrom the identification code of the source (2a...2n) corresponding to the region being processed;
- and a memory device (7) arranged to store information associating the identification codes with the sources (2a...2n) and their positions in the space (1), to receive the identification code(s) from the processing unit (31) and to provide, in response, localisation information;
**characterised in that** the processing unit (31) is programmed for obtaining the identification code of the or each source (2a...2n) by processing a single image acquired by the camera (30) and for extracting the brightness profile along a single line, in the reading direction, of the matrix of pixels such that the brightness value for each row of the matrix of pixels is the sum or average of the brightness values of all pixels in the row, or alternatively the sum or average of the brightness values of part of the pixels in the row, or yet the brightness value of a single column, in the middle of the matrix, and **in that**, for the identification of a region of interest (40), the processing unit (31) is programmed for:
- performing a sparse sampling of the image by taking one every K pixels of the same image;
- building a reduced matrix including only the pixels taken by means of the sparse sampling;
- analysing the brightness of the pixels of the reduced matrix in order to determine an average brightness of the image background; and
- calculating a brightness threshold exceeding of which identifies the boundaries of the region of interest (40).

9. Localisation system (10) according to claim 8, wherein the driving means (4a...4n) are arranged to modulate each source (2a...2n):
- with an analogue periodic signal (5a...5n) or a combination of analogue periodic signals (5a...5n) of which the frequency or the frequency set, respectively, forms the identification code of the source (2a...2n); or
- with an analogue periodic signal (5a...5n) or a combination of analogue periodic signals (5a...5n) that is generated so as to produce an image the brightness profile of which is **characterised by** one or a plurality of non-zero coefficients in the wave vector domain, and the identification code of a source (2a...2n) consists of either the index of the non-zero coefficient, in case of modulation with a single periodic signal (5a...5n), or the set of the indices of the non-zero coefficients, in case of modulation with a combination of periodic signals (5a...5n).

10. Localisation system (10) according to claim 8 or 9, wherein the processing unit (31) is further programmed for bringing said brightness profile, prior to the determination of the indices, to a pre-set and constant length (L), preferably a power of 2, by adding predetermined leading and trailing values, said length being such as to determine a pre-set and constant time of acquisition of the region of interest (40) by the camera (30) and to determine, in the signal in the wave number domain, a position that is fixed and independent of the image size for a peak that is in one-to-one correspondence with the frequency of the periodic signal (5a...5n) or a frequency of the combination of periodic signals (5a...5n) or with said index or one of said indices, respectively.

11. Localisation system (10) according to any of claims 8 to 10, wherein, for checking the compatibility of a source (2a...2n) with the system (10), the processing unit (31) is programmed for checking whether:
- the size of the region of interest (40) containing the image of said source falls within a pre-set range;
- the region of interest (40) exhibits modulation in the reading direction of the matrix of pixels;
- the region of interest (40) exhibits no modulation in a direction perpendicular to said reading direction,
and for discarding regions of interest (40) which do not pass one or more of said checks.

12. Localisation system (10) according to any of claims 8 to 11, wherein the driving means (4a...4n) are arranged to modulate each source (2a...2n):
- with at least one periodic signal (5a...5n) having such a frequency that its period is a submultiple of the pre-set time of acquisition of the region of interest by the camera (30); or, in the alternative,
- with at least one periodic signal (5a...5n) the frequency of which is selected from a set of frequencies that are mutually spaced by values increasing or decreasing in non-linear manner, or in which the or each index is selected from a set of indices that are mutually spaced by values increasing or decreasing in non-linear manner.

13. Localisation system (10) according to claim 12, wherein, in case the driving means (4a...4n) modulate each source (2a...2n) with a combination of periodic signals (5a...5n) in which the frequencies or the indices are selected from a set of frequencies or indices which are mutually spaced by values increasing or decreasing in non-linear manner, the ratio between the frequencies or the indices relevant to the signals in each combination is used to form the identification code of the source (2a...2n).

14. Localisation system (10) according to any claims 8 to 13, wherein said processing unit (31) is further programmed for extrapolating the absolute value of the signal obtained by the Fourier transform and for determining the positions and the values of the peaks of such signal, obtaining the identification code therefrom.

15. A computer program product loaded into the memory of a processing unit (31) belonging to a device (3), in particular a mobile communication terminal (3), wherein the device (3) is carried by a user inside a space (1) in which a plurality of sources (2a...2n) of coded visible light are located, wherein the device is to be localised and includes a camera (30) arranged to record, according to the rolling shutter technique, images of a scene in which one or more sources (2a...2n) of said plurality of sources (2a...2n) of coded visible light are present, the product including portions of software code configured, when the product is executed on said processing unit (31), for implementing the method according to any claims 1 to 7.

## Patentansprüche

1. Verfahren zur Lokalisierung eines Geräts (3), das von einem Benutzer getragen wird, in einem Raum (1), in dem sich mehrere Quellen (2a...2n) von kodiertem sichtbarem Licht befinden, wobei das Verfahren die folgenden Schritte aufweist:
- Modulieren jeder Quelle (2a...2n) mit einem unterschiedlichen periodischen Signal (5a...5n) oder einer unterschiedlichen Kombination periodischer Signale (5a...5n) und Zuordnen eines Identifikationscodes, der mit der Frequenz jedes periodischen Signals (5a...5n) oder den Frequenzen jeder Kombination von periodischen Signalen (5a...5n) verknüpft ist, zu dieser Quelle (2a...2n),
- Erfassen (103) von Bildern einer Ansicht, in der eine oder mehrere Quellen (2a...2n) der Quellen (2a...2n) von kodiertem sichtbarem Licht vorhanden sind, mittels einer Kamera (30) der Vorrichtung (3), wobei die Kamera eine Matrix aus Pixeln enthält, die nach einem Rolling-Shutter-Verfahren sequentiell ausgelesen werden,
- Verarbeiten (104, 105) eines Bildes, um den Identifikationscode der oder jeder Quelle (2a...2n) zu erkennen, die in dem Bild vorhanden ist, durch die folgenden Schritte:
- Identifizieren (104, 202-204) eines oder mehrerer Untersuchungsbereiche (40) in dem Bild, die jeweils im Wesentlichen den einzigen Block von Pixeln enthalten, der die Quelle (2a...2n) enthält,
- Prüfen (104, 205-211) der Kompatibilität der Quelle oder der Quellen, die in dem oder jedem Untersuchungsbereich (40) vorhanden sind, mit den Charakteristika eines Systems (10), welches das Verfahren implementiert, und, für jeden systemkompatiblen Untersuchungsbereich (40)
- Extrahieren (302) eines Helligkeitsprofils des Untersuchungsprofils (40) in Leserichtung der Pixelmatrix; und
- Bestimmen (305, 306) der Indizes der von Null verschiedenen Koeffizienten in dem Wellenzahlenbereich, der die Helligkeitsprofile charakterisiert, und daraus Ermitteln des Identifikationscodes der Quelle (2a...2n), die zu den verarbeiteten Bereichen gehören,
- und Zugreifen (107) durch Verwendung des erkannten Identifikationscodes auf Informationen, welche die Codes den Quellen (2a...2n) und ihren Positionen im Raum (1) zuordnen;
- **dadurch gekennzeichnet, dass** der Verarbeitungsschritt (104, 105) mit einem einzelnen Bild durchgeführt wird und die Extraktion des Helligkeitsprofils entlang einer einzelnen Linie in Leserichtung der Pixelmatrix vornimmt, so dass der Helligkeitswert für jede Reihe der Pixelmatrix die Summe oder der Durchschnitt der Helligkeitswerte von allen Pixeln in der Reihe ist, oder alternativ die Summe oder der Durchschnitt der Helligkeitswerte eines Teils der Pixel in der Reihe oder der Helligkeitswert einer einzelnen Spalte in der Mitte der Matrix, und dass die Identifikation (202-204) eines Untersuchungsbereichs die Schritte enthält:
- Durchführen (202) einer spärlichen Stichprobenziehung aus dem Bild, indem nur jedes K-te Pixel genommen wird,
- Aufbauen einer reduzierten Matrix, welche die Pixel der Stichprobenziehung enthält,
- Analysieren (203) der Helligkeit der Pixel in der reduzierten Matrix, um eine durchschnittliche Helligkeit des Bildhintergrundes zu bestimmen, und
- Berechnen eines Helligkeitsschwellenwerts, dessen Überschreiten die Grenzen des Untersuchungsbereichs identifiziert.

2. Verfahren nach Anspruch 1, wobei:
- der Identifikationscode einer Quelle (2a...2n) aus der Frequenz des periodischen Signals (5a...5n) oder der Menge der Frequenzen der Kombination periodischer Signale (5a...5n) besteht, oder
- das periodische Signal (5a...5n) oder die Kombination periodischer Signale (5a...5n) so generiert werden, dass ein Bild erzeugt wird, dessen Helligkeitsprofil durch einen oder mehrere von Null verschiedene Koeffizienten im Wellenzahlenbereich charakterisiert ist, und der Identifikationscode einer Quelle (2a...2n) entweder aus dem Index der von Null verschiedenen Koeffizienten besteht, im Fall der Modulation mit einem einzelnen periodischen Signal (5a...5n), oder der Menge der Indizes von Null verschiedenen Koeffizienten, im Fall der Modulation mit einer Kombination von periodischen Signalen (5a...5n).

3. Verfahren nach Anspruch 1 oder 2, wobei vor dem Schritt des Bestimmens der Indizes der Koeffizienten im Wellenzahlenbereich, der Schritt des Einstellens (303, 304) des Helligkeitsprofils auf eine vorgegebene und konstante Länge (L), vorzugsweise einer Potenz von 2, durch Hinzuaddieren vorgegebener führender und folgender Werte, wobei die Länge so ist, dass in dem Signal in dem Wellenzahlenbereich eine Position, die fest und unabhängig von der Bildgröße ist, für einen Spitze bestimmt wird, der eins zu eins dem Index oder den Indizes entspricht.

4. Verfahren nach einem der vorstehenden Ansprüche, wobei die Kompatibilitätsprüfungen eines Untersuchungsbereichs eine Prüfung (205) der Größe und eine Prüfung (207, 210) der Präsenz einer Modulation entlang von zwei orthogonalen Achsen des Bereichs enthalten, und wobei Untersuchungsbereiche, deren Größe nicht in den vorgegebenen Bereich fällt, und Untersuchungsbereiche, die keine Modulation in Leserichtung der Pixelmatrix zeigen oder Modulation in einer Richtung senkrecht zur Leserichtung zeigen, verworfen werden.

5. Verfahren nach einem der vorstehenden Ansprüche, wobei jede Quelle (2a...2n) moduliert wird:
- mit wenigstens einem analogen periodischen Signal (5a...5n), das eine solche Frequenz hat, dass die Periode ein Teil der Zeit der Erfassung eines Untersuchungsbereichs (40) durch die Kamera (30) ist; oder, alternativ,
- mit wenigstens einem analogen periodischen Signal (5a...5n), dessen Frequenz aus einer Menge von Frequenzen gewählt wird, deren Abstand voneinander in nicht-linearer Weise zunimmt oder abnimmt, oder in welcher der oder jeder Index aus einer Menge von Indizes gewählt wird, deren Abstand voneinander in nicht-linearer Weise zunimmt oder abnimmt.

6. Verfahren nach Anspruch 5, wobei im Fall der Modulation mit einer Kombination periodischer Signale (5a...5n), bei welcher die Frequenzen oder Indizes der Koeffizienten aus einer Menge von Frequenzen beziehungsweise Indizes ausgewählt werden, deren Abstand voneinander in nicht-linearer Weise zunimmt oder abnimmt, wobei das Verhältnis zwischen den Frequenzen oder den Indizes der Koeffizienten der Signale in jeder Kombination als Teil des Identifikationscodes der Quelle (2a...2n) verwendet wird.

7. Verfahren nach einem der vorstehenden Ansprüche, wobei zum Erkennen des Identifikationscodes der Absolutwert des durch Transformation erhaltenen Signals extrapoliert wird und die Positionen und Werte der Spitzen eines solchen Signals bestimmt werden.

8. Lokalisierungssystem mit kodiertem Licht zur Lokalisierung einer Vorrichtung (3), die von einem Benutzer in einem Raum (1) getragen wird, wobei das System aufweist:
- mehrere Quellen (2a...2n) kodierten sichtbaren Lichts, die sich in dem Raum (1) befinden,
- Mittel (4a...4n) zum Steuern der Quellen (2a...2n) der mehreren Quellen (2a...2n) kodierten sichtbaren Lichts, wobei die Mittel dafür ausgelegt sind, das von jeder Quelle (2a...2n) emittierte Licht mit einem unterschiedlichen periodischen Signal (5a...5n) oder unterschiedlichen Kombinationen periodischer Signale (5a...5n) zu modulieren, wobei die Frequenz jedes periodischen Signals (5a...5n) oder die Frequenzen jeder Kombination periodischer Signale (5a...5n) mit einem Identifikationscode für die entsprechende Quelle (2a...2n) verknüpft sind,
- eine Kamera (30), die zu der Vorrichtung (3) gehört und dafür ausgelegt ist, Bilder einer Ansicht aufzunehmen, in der eine oder mehrere Quellen (2a...2n) vorhanden sind, wobei die Kamera eine Matrix von Pixeln hat, die sequentiell nach einem Rolling-Shutter-Verfahren ausgelesen werden,
- einer Verarbeitungseinheit (31), die ebenfalls zu der Vorrichtung (3) gehört und programmiert ist zum:
- Identifizieren in einem Bild der Ansicht von einem oder mehreren Untersuchungsbereichen (40), die jeweils im Wesentlichen den einzigen Block von Pixeln enthalten, der die Quelle (2a...2n) enthält;
- Prüfen der Kompatibilität der Quelle (2a...2n), die in dem oder in jedem Untersuchungsbereich (40) vorhanden ist, mit den Charakteristika des Systems (10), und, für jeden System kompatiblen Untersuchungsbereich (40),
- Extrahieren eines Helligkeitsprofils des Untersuchungsbereichs (40) in Leserichtung der Pixelmatrix,
- Bestimmen der Indizes der von Null verschiedenen Koeffizienten in dem Wellenzahlenbereich, der das Helligkeitsprofil charakterisiert, und Ermitteln des Identifikationscodes der Quelle (2a...2n) daraus, welcher dem verarbeiteten Bereich entspricht,
- und einer Speichervorrichtung (7), die dafür ausgelegt ist, Informationen zu speichern, welche die Identifikationscodes den Quellen (2a...2n) und deren Positionen in dem Raum (1) zuordnen, den/die Identifikationscode(s) von der Verarbeitungseinheit (31) zu erhalten und als Antwort darauf, Lokalisierungsinformationen zur Verfügung zu stellen;
- **dadurch gekennzeichnet, dass** die Arbeitseinheit (31) dazu programmiert ist, den Identifikationscode der oder jeder Quelle (2a...2n) zu erhalten, indem ein einzelnes von der Kamera erfasstes Bild verarbeitet wird, und das Helligkeitsprofil entlang einer einzelnen Linie in Leserichtung der Pixelmatrix zu extrahieren, so dass der Helligkeitswert für jede Zeile der Pixelmatrix die Summe oder der Durchschnitt der Helligkeitswerte aller Pixel der Zeile ist oder alternativ die Summe oder der Durchschnitt der Helligkeitswerte eines Teils der Pixel der Reihe ist oder der Helligkeitswert einer einzelnen Spalte in der Mitte der Matrix ist, und dass zur Identifikation eines Untersuchungsbereichs (40) die Arbeitseinheit (31) dazu programmiert ist:
- eine spärliche Stichprobe des Bildes zu ziehen, indem jedes K-te Pixel dieses Bildes genommen wird
- Aufbauen einer reduzierten Matrix, die nur die durch die spärliche Stichprobenziehung gewonnenen Pixel enthält;
- Analysieren der Helligkeit der Pixel der reduzierten Matrix, um eine durchschnittliche Helligkeit des Bildhintergrunds zu bestimmen, und
- Berechnen eines Helligkeitsschwellenwerts, dessen Überschreiten die Grenzen des Untersuchungsbereichs (40) anzeigt.

9. Lokalisierungssystem (10) nach Anspruch 8, wobei die Steuerungsmittel (4a...4n) dafür ausgelegt sind, jede Quelle (2a...2n) zu modulieren:
- mit einem analogen periodischen Signal (5a...5n) oder einer Kombination analoger periodischer Signale (5a...5n), dessen Frequenz oder deren Frequenzmenge den Identifikationscode der Quelle (2a...2n) bildet; oder
- mit einem analogen periodischen Signal (5a...5n) oder einer Kombination analoger periodischer Signale (5a...5n), das/die generiert wird, um ein Bild zu erzeugen, dessen Helligkeitsprofil durch einen oder mehrere von Null verschiedene Koeffizienten in dem Wellenvektorbereich charakterisiert ist, und der Identifikationscode einer Quelle (2a...2n) entweder aus dem Index des von Null verschiedenen Koeffizienten besteht, im Fall einer Modulation mit einem einzelnen periodischen Signal (5a...5n), oder der Menge von Indizes der von Null verschiedenen Koeffizienten, im Fall einer Modulation mit einer Kombination periodischer Signale (5a...5n).

10. Lokalisierungssystem (10) nach Anspruch 8 oder 9, wobei die Arbeitseinheit (31) zudem dazu programmiert ist, vor der Bestimmung der Indizes das Helligkeitsprofil auf eine vorgegebene und konstante Länge (L), vorzugsweise einer Potenz von 2, einzustellen, indem vorgegebene führende und folgende Werte addiert werden, wobei die Länge so ist, dass sie eine vorgegebene und konstante Erfassungszeit des Untersuchungsbereichs (40) durch die Kamera (30) bestimmt und in dem Signal in dem Wellenzahlenbereich eine Position, die fixiert ist und unabhängig von der Bildgröße, für eine Spitze bestimmt, die eins-zu-eins der Frequenz des periodischen Signals (5a...5n) oder einer Frequenz der Kombination der periodischen Signale (5a...5n) oder dem Index bzw. einem der Indizes entspricht.

11. Lokalisierungssystem (10) nach einem der Ansprüche 8 bis 10, wobei zum Prüfen der Kompatibilität einer Quelle (2a...2n) mit dem System (10) die Arbeitseinheit (31) dazu programmiert ist zu prüfen, ob
- die Größe des Untersuchungsbereichs (40), der das Bild der Quelle enthält, in einen vorgegebenen Bereich fällt,
- der Untersuchungsbereich (40) in Leserichtung der Pixelmatrix Modulation zeigt,
- der Untersuchungsbereich (40) keine Modulation in einer Richtung senkrecht zur Leserichtung zeigt, und
Untersuchungsbereiche (40) zu verwerfen, die einen oder mehrere dieser Prüfungen nicht bestehen.

12. Lokalisationssystem (10) nach einem der Ansprüche 8 bis 11, wobei die Steuerungsmittel (4a...4n) dafür ausgelegt sind, jede Quelle (2a...2n) zu modulieren:
- mit wenigstens einem periodischen Signal (5a...5n), das eine solche Frequenz hat, dass seine Periode ein Teil der vorgegebenen Erfassungszeit des Untersuchungsbereichs durch die Kamera (30) ist, oder, alternativ
- mit wenigstens einem periodischen Signal (5a...5n), dessen Frequenz aus einer Menge von Frequenzen ausgewählt ist, deren Abstand voneinander in nicht-linearer Weise zunimmt oder abnimmt, oder in welcher der oder jeder Index aus einer Menge von Indizes gewählt wird, deren Abstand voneinander in nicht-linearer Weise zunimmt oder abnimmt.

13. Lokalisierungssystem (10) nach Anspruch 12, wobei, falls die Steuerungsmittel (4a...4n) jede Quelle (2a...2n) mit einer Kombination periodischer Signale (5a...5n) modulieren, bei der die Frequenzen oder Indizes aus einer Menge von Frequenzen oder Indizes ausgewählt wurden, deren Abstand voneinander in nicht-linearer Weise zunimmt oder abnimmt, wobei das Verhältnis zwischen den Frequenzen oder den Indizes, die für die Signale in jeder Kombination relevant sind, verwendet wird, um den Identifikationscodes der Quelle (2a...2n) zu bilden.

14. Lokalisierungssystem (10) nach einem der Ansprüche 8 bis 13, wobei die Arbeitseinheit (31) zudem programmiert ist, den Absolutwert des durch Fourier-Transformation erhaltenen Signals zu extrapolieren und die Positionen und Werte der Spitzen eines solchen Signals zu bestimmen, und daraus den Identifikationscode zu ermitteln.

15. Computerprogrammprodukt, das in den Speicher einer Arbeitseinheit (31) geladen ist, die zu einer Vorrichtung (3) insbesondere einem Mobilfunkgerät (3), gehört, wobei die Vorrichtung (3) von einem Benutzer in einem Raum (1) getragen wird, in dem mehrere Quellen (2a...2n) kodierten sichtbaren Lichts vorhanden sind, wobei die Vorrichtung lokalisiert werden soll und eine Kamera (30) aufweist, die dafür ausgelegt ist, nach dem Rolling-Shutter-Verfahren Bilder einer Ansicht, in der eine oder mehrere Quellen (2a...2n) der Quellen (2a...2n) kodierten sichtbaren Lichts vorhanden sind, zu erfassen, wobei das Produkt Abschnitte eines Computerprogramms enthält, das dafür ausgelegt ist, ein Verfahren nach einem der Ansprüche 1 bis 7 auszuführen, wenn das Produkt von der Arbeitseinheit (31) ausgeführt wird.

## Revendications

1. Procédé de localisation d'un dispositif (3), porté par un utilisateur, à l'intérieur d'un espace (1) dans lequel se trouvent une pluralité de sources (2a...2n) de lumière visible codée, le procédé comportant les étapes consistant à :
- moduler chaque source (2a...2n) avec un signal périodique différent (5a...5n) ou une combinaison différente de signaux périodiques (5a...5n) et attribuer un code d'identification lié à la fréquence de chaque signal périodique (5a...5n) ou aux fréquences de chaque combinaison de signaux périodiques (5a...5n) à ladite source (2a...2n) ;
- acquérir (103) des images d'une scène dans laquelle une ou plusieurs sources (2a...2n) de ladite pluralité de sources (2a...2n) de lumière visible codée sont présentes au moyen d'une caméra (30) du dispositif (3), la caméra comportant une matrice de pixels lus séquentiellement selon la technique de l'obturateur roulant ;
- traiter (104, 105) une image afin de reconnaître le code d'identification de la ou de chaque source (2a...2n) présente dans l'image par les étapes consistant à :
- identifier (104, 202 - 204) dans l'image une ou plusieurs régions d'intérêt (40), chacune comprenant sensiblement le seul bloc de pixels contenant une source (2a...2n) ;
- vérifier (104, 205 - 211) la compatibilité de la source ou des sources présentes dans la région d'intérêt ou chaque région d'intérêt (40) avec les caractéristiques d'un système (10) mettant en œuvre le procédé ; et, pour chaque région d'intérêt (40) compatible avec le système,
- extraire (302) un profil de luminosité de la région d'intérêt (40) dans le sens de lecture de la matrice de pixels ; et
- déterminer (305, 306) les indices des coefficients non nuls, dans le domaine des nombres d'ondes, caractérisant le profil de luminosité, et obtenir à partir de ceux-ci le code d'identification de la source (2a...2n) correspondant à la région en cours de traitement ;
- et accéder (107), en utilisant le code d'identification reconnu, à des informations associant les codes aux sources (2a...2n) et à leurs positions dans l'espace (1) ;
**caractérisé en ce que** l'étape de traitement (104, 105) est effectuée sur une seule image et réalise l'extraction du profil de luminosité le long d'une seule ligne, dans le sens de lecture, de la matrice de pixels, de telle sorte que la valeur de luminosité pour chaque rangée de la matrice de pixels est la somme ou la moyenne des valeurs de luminosité de tous les pixels dans la rangée, ou, en variante, la somme ou la moyenne des valeurs de luminosité d'une partie des pixels dans la rangée, ou encore la valeur de luminosité d'une seule colonne, au milieu de la matrice, et **en ce que** l'identification (202 - 204) d'une région d'intérêt comporte les étapes consistant à :
- effectuer (202) un échantillonnage clairsemé de l'image en ne prenant qu'un pixel tous les K pixels ;
- construire une matrice réduite comportant les pixels résultant de l'échantillonnage ;
- analyser (203) la luminosité des pixels dans la matrice réduite afin de déterminer une luminosité moyenne de l'arrière-plan de l'image ; et
- calculer un seuil de luminosité dont le dépassement identifie les limites de la région d'intérêt (40).

2. Procédé selon la revendication 1, dans lequel :
- le code d'identification d'une source (2a...2n) consiste en la fréquence dudit signal périodique (5a...5n) ou en l'ensemble des fréquences de ladite combinaison de signaux périodiques (5a...5n) ; ou
- ledit signal périodique (5a...5n) ou ladite combinaison de signaux périodiques (5a...5n) est généré de manière à produire une image dont le profil de luminosité est **caractérisé par** un ou une pluralité de coefficients non nuls dans le domaine des nombres d'ondes, et le code d'identification d'une source (2a...2n) consiste soit en l'indice du coefficient non nul, en cas de modulation avec un seul signal périodique (5a...5n), soit en l'ensemble des indices des coefficients non nuls, en cas de modulation avec une combinaison de signaux périodiques (5a...5n).

3. Procédé selon la revendication 1 ou 2, comportant, avant l'étape consistant à déterminer les indices des coefficients dans le domaine des nombres d'ondes, l'étape consistant à amener (303, 304) ledit profil de luminosité à une longueur (L) prédéfinie et constante, de préférence une puissance de 2, en ajoutant des valeurs d'avance et de retard prédéterminées, la longueur étant telle qu'elle détermine, dans le signal dans le domaine des nombres d'ondes, une position qui est fixe et indépendante de la taille d'image pour un pic qui est en correspondance biunivoque avec ledit indice ou l'un desdits indices.

4. Procédé selon l'une quelconque revendication précédente, dans lequel les vérifications de compatibilité sur une région d'intérêt comportent une vérification (205) de la taille et une vérification (207, 210) de la présence de modulation le long de deux axes orthogonaux de ladite région, et dans lequel des régions d'intérêt dont la taille ne se situe pas dans une plage prédéfinie et des régions d'intérêt qui ne présentent pas de modulation dans le sens de lecture de la matrice de pixels ou qui présentent une modulation dans une direction perpendiculaire audit sens de lecture sont éliminées.

5. Procédé selon l'une quelconque revendication précédente, dans lequel chaque source (2a...2n) est modulée :
- avec au moins un signal périodique analogique (5a...5n) ayant une fréquence telle que sa période est un sous-multiple du temps d'acquisition de la région d'intérêt (40) par la caméra (30) ; ou, à titre de variante,
- avec au moins un signal périodique analogique (5a...5n) dont la fréquence est choisie parmi un ensemble de fréquences qui sont mutuellement espacées par des valeurs croissantes ou décroissantes de manière non linéaire, ou dans lequel l'indice ou chaque indice est choisi parmi un ensemble d'indices qui sont mutuellement espacés par des valeurs croissantes ou décroissantes de manière non linéaire.

6. Procédé selon la revendication 5, dans lequel, en cas de modulation avec une combinaison de signaux périodiques (5a...5n) dans lesquels les fréquences ou les indices des coefficients sont choisis parmi un ensemble de fréquences ou d'indices, respectivement, qui sont mutuellement espacés par des valeurs croissantes ou décroissantes de manière non linéaire, le rapport entre les fréquences ou les indices des coefficients des signaux dans chaque combinaison est utilisé comme partie du code d'identification de la source (2a...2n).

7. Procédé selon l'une quelconque revendication précédente, dans lequel, pour reconnaître le code d'identification, la valeur absolue du signal obtenu par la transformée est extrapolée et les positions et les valeurs des pics d'un tel signal sont déterminées.

8. Système de localisation à l'aide de lumière codée, permettant de localiser un dispositif (3) porté par un utilisateur à l'intérieur d'un espace (1), le système comportant :
- une pluralité de sources (2a...2n) de lumière visible codée situées dans l'espace (1) ;
- des moyens (4a...4n) permettant de piloter les sources (2a...2n) de ladite pluralité de sources (2a...2n) de lumière visible codée, les moyens étant conçus pour moduler la lumière émise par chaque source (2a...2n) avec un signal périodique différent (5a...5n) ou une combinaison différente de signaux périodiques (5a...5n), la fréquence de chaque signal périodique (5a...5n) ou les fréquences de chaque combinaison de signaux périodiques (5a...5n) étant liées à un code d'identification pour la source respective (2a...2n) ;
- une caméra (30) appartenant au dispositif (3) et conçue pour prendre des images d'une scène dans laquelle une ou plusieurs sources (2a...2n) sont présentes, la caméra (30) ayant une matrice de pixels lus séquentiellement selon la technique de l'obturateur roulant ;
- une unité de traitement (31), appartenant également au dispositif (3) et programmée pour :
- identifier dans une image de la scène une ou plusieurs régions d'intérêt (40) comprenant chacune sensiblement le seul bloc de pixels contenant une source (2a...2n) ;
- vérifier la compatibilité de la source (2a...2n) présente dans la région d'intérêt ou chaque région d'intérêt (40) avec les caractéristiques du système (10) ; et, pour chaque région d'intérêt (40) compatible avec le système,
- extraire un profil de luminosité de la région d'intérêt (40) dans le sens de lecture de la matrice de pixels ; et
- déterminer les indices des coefficients non nuls, dans le domaine des nombres d'ondes, caractérisant le profil de luminosité, et obtenir à partir de ceux-ci le code d'identification de la source (2a...2n) correspondant à la région en cours de traitement ;
- et un dispositif de mémoire (7) conçu pour stocker des informations associant les codes d'identification aux sources (2a...2n) et à leurs positions dans l'espace (1), pour recevoir le(s) code(s) d'identification de l'unité de traitement (31) et pour fournir, en réponse, des informations de localisation ;
**caractérisé en ce que** l'unité de traitement (31) est programmée pour obtenir le code d'identification de la source ou de chaque source (2a...2n) en traitant une seule image acquise par la caméra (30) et pour extraire le profil de luminosité le long d'une seule ligne, dans le sens de lecture, de la matrice de pixels de telle sorte que la valeur de luminosité pour chaque rangée de la matrice de pixels est la somme ou la moyenne des valeurs de luminosité de tous les pixels dans la rangée, ou, en variante, la somme ou la moyenne des valeurs de luminosité d'une partie des pixels dans la rangée, ou encore la valeur de luminosité d'une seule colonne, au milieu de la matrice, et **en ce que**, pour l'identification d'une région d'intérêt (40), l'unité de traitement (31) est programmée pour :
- effectuer un échantillonnage clairsemé de l'image en prenant un pixel tous les K pixels de la même image ;
- construire une matrice réduite comportant uniquement les pixels pris au moyen de l'échantillonnage clairsemé ;
- analyser la luminosité des pixels de la matrice réduite afin de déterminer une luminosité moyenne de l'arrière-plan de l'image ; et
- calculer un seuil de luminosité dont le dépassement identifie les limites de la région d'intérêt (40).

9. Système de localisation (10) selon la revendication 8, dans lequel les moyens de pilotage (4a...4n) sont conçus pour moduler chaque source (2a...2n) :
- avec un signal périodique analogique (5a...5n) ou une combinaison de signaux périodiques analogiques (5a...5n) dont la fréquence ou l'ensemble de fréquences, respectivement, forme le code d'identification de la source (2a...2n) ; ou
- avec un signal périodique analogique (5a...5n) ou une combinaison de signaux périodiques analogiques (5a...5n) qui est généré de manière à produire une image dont le profil de luminosité est **caractérisé par** un ou une pluralité de coefficients non nuls dans le domaine des vecteurs d'ondes, et le code d'identification d'une source (2a...2n) consiste soit en l'indice du coefficient non nul, en cas de modulation avec un seul signal périodique (5a...5n), soit en l'ensemble des indices des coefficients non nuls, en cas de modulation avec une combinaison de signaux périodiques (5a...5n).

10. Système de localisation (10) selon la revendication 8 ou 9, dans lequel l'unité de traitement (31) est en outre programmée pour amener ledit profil de luminosité, avant la détermination des indices, à une longueur (L) prédéfinie et constante, de préférence une puissance de 2, en ajoutant des valeurs d'avance et de retard prédéterminées, ladite longueur étant telle qu'elle détermine un temps prédéfini et constant d'acquisition de la région d'intérêt (40) par la caméra (30) et qu'elle détermine, dans le signal dans le domaine des nombres d'ondes, une position qui est fixe et indépendante de la taille d'image pour un pic qui est en correspondance biunivoque avec la fréquence du signal périodique (5a...5n) ou une fréquence de la combinaison de signaux périodiques (5a...5n) ou avec ledit indice ou l'un desdits indices, respectivement.

11. Système de localisation (10) selon l'une quelconque des revendications 8 à 10, dans lequel, pour vérifier la compatibilité d'une source (2a...2n) avec le système (10), l'unité de traitement (31) est programmée pour vérifier si :
- la taille de la région d'intérêt (40) contenant l'image de ladite source se situe dans une plage prédéfinie ;
- la région d'intérêt (40) présente une modulation dans le sens de lecture de la matrice de pixels ;
- la région d'intérêt (40) ne présente aucune modulation dans une direction perpendiculaire audit sens de lecture,
et pour éliminer des régions d'intérêt (40) qui ne satisfont pas à une ou plusieurs desdites vérifications.

12. Système de localisation (10) selon l'une quelconque des revendications 8 à 11, dans lequel les moyens de pilotage (4a...4n) sont conçus pour moduler chaque source (2a...2n) :
- avec au moins un signal périodique (5a...5n) ayant une fréquence telle que sa période est un sous-multiple du temps prédéfini d'acquisition de la région d'intérêt par la caméra (30) ; ou, à titre de variante,
- avec au moins un signal périodique (5a...5n) dont la fréquence est choisie parmi un ensemble de fréquences qui sont mutuellement espacées par des valeurs croissantes ou décroissantes de manière non linéaire, ou dans lequel l'indice ou chaque indice est choisi parmi un ensemble d'indices qui sont mutuellement espacés par des valeurs croissantes ou décroissantes de manière non linéaire.

13. Système de localisation (10) selon la revendication 12, dans lequel, dans le cas où les moyens de pilotage (4a...4n) modulent chaque source (2a...2n) avec une combinaison de signaux périodiques (5a...5n) dans lesquels les fréquences ou les indices sont choisis parmi un ensemble de fréquences ou d'indices qui sont mutuellement espacés par des valeurs croissantes ou décroissantes de manière non linéaire, le rapport entre les fréquences ou les indices relatifs aux signaux dans chaque combinaison est utilisé pour former le code d'identification de la source (2a...2n).

14. Système de localisation (10) selon l'une quelconque des revendications 8 à 13, dans lequel ladite unité de traitement (31) est en outre programmée pour extrapoler la valeur absolue du signal obtenu par la transformée de Fourier et pour déterminer les positions et les valeurs des pics d'un tel signal, obtenant le code d'identification à partir de celles-ci.

15. Produit-programme informatique chargé dans la mémoire d'une unité de traitement (31) appartenant à un dispositif (3), en particulier un terminal de communication mobile (3), dans lequel le dispositif (3) est porté par un utilisateur à l'intérieur d'un espace (1) dans lequel se trouvent une pluralité de sources (2a...2n) de lumière visible codée, dans lequel le dispositif doit être localisé et comporte une caméra (30) conçue pour enregistrer, selon la technique de l'obturateur roulant, des images d'une scène dans laquelle sont présentes une ou plusieurs sources (2a...2n) de ladite pluralité de sources (2a...2n) de lumière visible codée, le produit comportant des parties de code logiciel configurées, lorsque le produit est exécuté sur ladite unité de traitement (31), pour mettre en œuvre le procédé selon l'une quelconque des revendications 1 à 7.
